# DEMANDE DE BREVET EUROPEEN

(11) **EP 4 729 158 A1**
(43) Date de publication de la demande: **22.04.2026**
(21) Numéro de dépôt: 25208753.1
(22) Date de dépôt: 15.10.2025
(51) Int. Cl.: B01D 61/02, B01D 63/08, B01D 69/06, B01D 69/10, B01D 71/02, C02F 1/44, C02F 103/00

(54) **DISPOSITIF DE FILTRATION D EAUX SALES ET PROCÉDÉ DE FILTRATION POUR EAUX SALES**

(30) Priorité: 15.10.2024 FR 2411125
(71) Demandeur: Le Roy, Dany, 29160 Crozon (FR)
(72) Inventeur: Le Roy, Dany, 29160 Crozon (FR); Le Roy, Dany, 29160 Crozon (FR)
(74) Mandataire: Derriennic, Tangui Jean

(57) **Abrégé**

L'invention concerne un dispositif de filtration d'eaux sales comportant un corps (21) rectangulaire ayant deux faces et une épaisseur, une première entrée/sortie (20a), remarquable en ce que ledit corps comporte : une pluralité de chemins (22) positionnés sur chaque face ; ladite pluralité de chemins est reliée avec ladite première entrée/sortie ; la pluralité de chemins de chaque face est symétrique par rapport au plan longitudinal dudit corps ; la première entrée/sortie étant configuré pour amener un fluide d'eaux sales à traiter ; une membrane (23) en graphène positionnée sur chaque face dudit corps ; ladite membrane comporte un tressage comportant des pores en forme de polygones ; la pluralité de pores de la membrane ayant une longueur comprise entre 1nm et 500nm, de préférence entre 200nm et 500nm ; lesdits pores étant configurées pour la filtration des eaux sales ; le corps comporte dans son épaisseur une rainure.

## Description

### Domaine technique de l'invention

La présente invention concerne un dispositif de filtration d'eaux sales et un procédé de filtration pour eaux sales.

Elle s'applique, en particulier, à l'ensemble des technologies, méthodes, et systèmes utilisés pour traiter et purifier les eaux contaminées provenant de diverses sources, comme les eaux grises (provenant des douches, éviers, etc.), les eaux noires (provenant des toilettes), et les eaux usées industrielles ou domestiques.

### Technique antérieure

Les membranes jouent un rôle crucial dans le traitement de l'eau, notamment en raison des avantages significatifs qu'elles offrent par rapport à d'autres technologies.

La filtration membranaire est souvent préférée pour plusieurs raisons, qui la distinguent d'autres technologies de traitement de l'eau, comme la filtration classique ou les traitements thermiques.

Contrairement à des procédés comme la distillation qui nécessitent une énergie thermique importante pour chauffer l'eau, la filtration membranaire fonctionne à température ambiante, ce qui réduit la consommation énergétique globale et minimise les coûts liés à l'utilisation de la chaleur.

Les autres procédés de traitement de l'eau nécessitent souvent des produits chimiques pour la désinfection (chlore, ozone) ou la coagulation. En revanche, la filtration membranaire peut retirer les contaminants sans nécessiter ces produits, réduisant ainsi les résidus chimiques dans l'eau traitée ainsi que les coûts et impacts environnementaux associés.

Contrairement à des procédés comme l'utilisation de résines d'échange d'ions qui demandent une régénération fréquente avec des produits chimiques, les membranes nécessitent moins de maintenance et sont plus durables, en particulier avec les systèmes de nettoyage adaptés.

Parmi les différents types de technologies membranaires, les procédés sous pression sont les plus largement utilisés dans le traitement de l'eau. Ils incluent des technologies telles que la microfiltration (MF), l'ultrafiltration (UF), la nanofiltration (NF) et l'osmose inverse (OI), chacune ayant ses applications spécifiques :
Concernant la microfiltration (MF) et l'ultrafiltration (UF), ces procédés sont souvent utilisés pour éliminer les particules en suspension, les micro-organismes, et les bactéries. La MF a des pores plus larges (0,1 à 10 micromètres) que l'UF, et est donc utilisée pour des applications moins exigeantes, comme la filtration de l'eau potable. L'UF, avec des pores plus fins (0,01 à 0,1 micromètres), est efficace pour retirer les virus et certaines matières organiques.

Concernant la Nanofiltration (NF), ce procédé est utilisé pour éliminer des ions dissous, de petites molécules organiques, et des sels polyvalents. Il est très efficace pour traiter l'eau douce et retirer des contaminants comme les nitrates, les métaux lourds, et les pesticides.

Concernant l'Osmose Inverse (OI), c'est la technologie de membrane la plus fine, capable d'éliminer les plus petites molécules, y compris les ions monovalents comme le sel (NaCl). L'osmose inverse est largement utilisée dans le dessalement de l'eau de mer et l'eau saumâtre, ainsi que dans la production d'eau ultrapure pour des industries comme l'électronique ou la pharmacie.

L'invention se situe dans les nanofiltrations.

Les procédés membranaires, malgré leurs nombreux avantages, présentent également certains inconvénients, principalement liés aux méthodes de fabrication actuelles des membranes.

Les membranes produites de manière non contrôlée peuvent présenter des pores de tailles très différentes, ce qui réduit leur efficacité et leur sélectivité. Des pores plus grands peuvent laisser passer des contaminants, tandis que des pores trop petits augmentent la résistance à l'écoulement, nécessitant une pression accrue.

La variabilité des procédés de fabrication entraîne des membranes disponibles en formats restreints, rendant difficile leur adaptation à des applications spécifiques nécessitant des membranes de dimensions ou de propriétés particulières.

Les membranes fabriquées selon des méthodes non optimisées nécessitent souvent des pressions élevées pour fonctionner efficacement. Plus la pression nécessaire est élevée, plus le système de filtration consomme de l'énergie, augmentant ainsi les coûts d'exploitation. Par exemple, l'osmose inverse, qui nécessite déjà des pressions importantes pour le dessalement de l'eau de mer, devient encore plus coûteuse énergétiquement si les membranes ne sont pas efficaces. Le flux de perméat (l'eau filtrée) peut être réduit en raison de la nécessité de surmonter une résistance élevée à travers la membrane. Cela entraîne une baisse du rendement global du processus, car il devient nécessaire d'appliquer plus de pression pour obtenir une quantité suffisante d'eau filtrée.

Un des plus grands défis dans l'utilisation de membranes est leur sensibilité à l'encrassement, un phénomène où les pores des membranes se bouchent en raison de la présence de particules, de matières organiques, ou de micro-organismes.

On peut notamment citer le document US9463421 qui décrit un dispositif de filtration planaire et d'isolation sélective et de récupération.

Toutefois, ce document se limite à des passages entre différents composants sans chemins précis et ne facilitant pas la maintenance du dispositif.

Il y a le document US2022220006 décrivant un dispositif de dessalement continu de l'eau de mer et son procédé.

Ce dispositif est obligé de passer par une phase vapeur pour enlever les impuretés des eaux. Et, il fait du traitement avec des pores configuré exclusivement pour la microfiltration.

Et le document CA2895088 qui présente une déminéralisation ou un dessalement de feuilles de graphe perforées.

Cependant, ce document présente un écoulement en cascade ne permettant pas de faciliter l'insertion du dispositif.

### Présentation de l'invention

La filtration membranaire présente de nombreux avantages en termes de traitement de l'eau, cependant il existe encore des défis techniques importants à surmonter. La présente invention vise à remédier à ces inconvénients avec une approche totalement novatrice.

Plus précisément, l'invention a pour objectif de fournir des membranes dans le traitement de l'eau améliorées afin d'optimiser les performances tout en réduisant les coûts énergétiques et avec, l'impact environnemental.

Ces objectifs, ainsi que d'autres qui apparaîtront par la suite, sont atteints, selon un premier aspect, à l'aide d'un dispositif de filtration d'eaux sales comportant un corps rectangulaire ayant deux faces et une épaisseur, une première entrée/sortie, remarquable en ce que ledit corps comporte :
- une pluralité de chemins positionnés sur chaque face ; ladite pluralité de chemins est reliée avec ladite première entrée/sortie ; la pluralité de chemins de chaque face est symétrique par rapport au plan longitudinal dudit corps ;
- la première entrée/sortie étant configuré pour amener un fluide d'eaux sales à traiter passant par la pluralité de chemins ;
- une membrane en graphène positionnée sur chaque face dudit corps ; ladite membrane comporte un tressage comportant des pores en forme de polygones ; la pluralité de pores de la membrane ayant une longueur comprise entre 1nm et 500nm, de préférence entre 200nm et 500nm ; lesdits pores étant configurées pour la filtration des eaux sales ;
- le corps comporte dans son épaisseur une rainure.

Grâce à ces dispositions, il est possible de produire une eau quasi potable à partir du traitement des eaux usées ou industrielles, afin de la réutiliser dans différents processus industriels : eau de process, eau de chauffage, eau d'arrosage, ou pour le rejet dans l'environnement après traitement.

De plus, il est diminué la consommation d'eau dans les processus industriels en favorisant la réutilisation de l'eau traitée, contribuant ainsi à la préservation des ressources en eau.

Il y a aussi une réduction de l'utilisation des intrants chimiques dans le processus de traitement de l'eau, en améliorant l'efficacité des systèmes et en intégrant des techniques comme le lavage des membranes avec séquences optimisées (air, air + eau, eau).

Il est alors possible de rendre les usines de traitement de l'eau plus efficaces et économiques, en améliorant les processus.

Une telle structure permet une filtration efficace à l'échelle nanométrique, capable de retenir de nombreux contaminants tout en maintenant un débit élevé grâce à la perméabilité exceptionnelle du graphène. La présence de membranes sur les deux faces actives permet de doubler la surface utile de filtration sans augmenter le volume du dispositif, optimisant les performances dans un encombrement réduit.

Le graphène est un matériau extrêmement fin (une seule couche d'atomes de carbone) tout en étant extrêmement robuste. Cette finesse permet à l'eau de passer à travers les membranes en graphène beaucoup plus rapidement que dans les membranes conventionnelles, ce qui augmente significativement le débit de perméat. Il en résulte une meilleure efficacité pour un volume d'eau traité plus important.

Grâce à sa grande perméabilité, les membranes en graphène nécessitent moins de pression pour pousser l'eau à travers elles, comparativement aux membranes traditionnelles telles que celles utilisées dans l'osmose inverse. Cela permet de réduire la consommation énergétique du système de filtration, un facteur essentiel pour le dessalement de l'eau de mer ou le traitement de l'eau usée à grande échelle.

Le graphène peut être conçu avec des pores de tailles précises à l'échelle nanométrique, ce qui le rend capable de filtrer des contaminants spécifiques, comme des ions, des molécules organiques, des métaux lourds... Cela permet une sélectivité élevée, offrant une excellente efficacité dans la purification de l'eau, et l'élimination des polluants.

Les membranes en graphène sont très résistantes à la fois d'un point de vue mécanique et chimique. Leur structure en nid d'abeilles les rend extrêmement solides malgré leur faible épaisseur. Elles sont également plus résistantes aux produits chimiques corrosifs utilisés dans certaines applications de traitement de l'eau, ce qui prolonge leur durée de vie et réduit les besoins en remplacement.

Les membranes en graphène montrent une meilleure résistance à l'encrassement (*fouling* en terminologie anglo-saxonne) par rapport aux membranes traditionnelles. Cela signifie qu'elles s'encrassent moins rapidement avec des matières organiques ou des micro-organismes, ce qui réduit la fréquence des nettoyages et augmente la durée de vie des membranes. Cela réduit également les temps d'arrêt et les coûts de maintenance.

De plus, le graphène possède également des propriétés qui peuvent être utilisées pour créer des membranes autonettoyantes ou antifouling, empêchant les particules, bactéries et autres impuretés de s'accumuler à la surface. Cela réduit l'accumulation de biofilms et prolonge la durée d'utilisation sans intervention manuelle pour le nettoyage.

Dans le cadre du fonctionnement d'un bassin, les niveaux NTB (Niveau Très Bas), NB (Niveau Bas), NH (Niveau Haut) et NTH (Niveau Très Haut) définissent des seuils critiques permettant d'assurer une régulation automatisée et sécurisée du système hydraulique. Par analogie, les propriétés intrinsèques du graphène peuvent être caractérisées par des plages de fonctionnement et des seuils limites. Ainsi, la conductivité électrique quasi idéale du graphène correspond à une zone de fonctionnement normal, équivalente aux niveaux compris entre NB et NH. En revanche, une altération de cette conductivité due à des impuretés, à un défaut de structure cristalline ou à des contraintes thermiques représente une condition dégradée, comparable à l'atteinte du niveau NTB. À l'opposé, l'exploitation des performances maximales du graphène, notamment sa résistance mécanique environ deux cents fois supérieure à celle de l'acier et sa conductivité thermique exceptionnelle, correspond à l'atteinte d'un seuil supérieur analogue au niveau NTH, traduisant une situation limite d'exploitation avant rupture ou perte de stabilité.

L'invention est avantageusement mise en œuvre selon les modes de réalisation et les variantes exposées ci-après, lesquelles sont à considérer individuellement ou selon toute combinaison techniquement opérante.

Dans un mode de réalisation, le corps comporte une deuxième entrée/sortie reliant à ladite pluralité de chemins.

Dans un mode de réalisation, la pluralité de chemins comporte une largeur comprise entre 0,09 mm et 1 mm, de préférence entre 0,2 mm et 0,5 mm.

Dans un mode de réalisation, le dispositif comporte, en outre, une première pompe configurée pour amener les eaux sales dans le corps par la première entrée/sortie et une deuxième pompe configurée pour extraire des eaux traitées hors du corps par la première entrée/sortie.

L'utilisation de pompe en amont et en aval du corps permet de contrôler l'entrée des eaux sales dans le corps ou la sortie des eaux sales dans le corps.

Les pompes assurent le contrôle de la vitesse des eaux dans le dispositif.

La première pompe récupère les eaux sales provenant de sources externes et elle renvoie les eaux sales dans le corps. La deuxième pompe aspire les eaux traitées par la membrane et elle les refoule vers un autre élément de traitement ou une autre source externe.

Selon une variante, la première pompe amène les eaux sales dans le corps par la deuxième entrée/sortie et la deuxième pompe extrait les eaux traitées hors du corps par la deuxième entrée/sortie.

Dans un mode de réalisation, le dispositif comporte une vanne positionnée en aval de la première pompe et en aval de la deuxième pompe.

L'utilisation de vannes entre chaque pompe et entrée/sortie permet de réguler l'écoulement des eaux avant la filtration et après la filtration.

Les vannes sont commandées mécaniquement par un élément de fermeture/ouverture ou électroniquement.

Les commandes électroniques sont configurées par un microcontrôleur.

Ce microcontrôleur comporte une unité de traitement configuré pour contrôler l'ouverture ou la fermeture de la vanne et envoyer des données de la vanne vers un terminal mobile.

Le terminal mobile peut être l'un des éléments suivants : un smartphone, une tablette, un ordinateur, une montre connectée.

La vanne est avantageusement de type électrocommandé pilotée par un microcontrôleur. Le dispositif comprend alors au moins un microcontrôleur programmable configuré pour contrôler l'ouverture et la fermeture de la vanne selon des consignes prédéfinies ou des données issues de capteurs intégrés au dispositif (par exemple pression, débit, turbidité ou conductivité).

Le microcontrôleur peut être alimenté par une source électrique autonome, telle qu'une batterie ou un module photovoltaïque ou filaire, et être relié à la vanne par une interface de commande (par exemple un transistor ou un relais statique). Il peut également être associé à une mémoire de stockage, une horloge temps réel, ou un module de communication sans fil permettant un pilotage à distance ou une surveillance en temps réel. L'ensemble permet d'intégrer des fonctions avancées telles que : le déclenchement automatique de cycles d'injection/extraction ; la fermeture de sécurité en cas de dépassement de seuils critiques ; la régulation dynamique du débit en fonction de la charge filtrante.

Une telle architecture rend possible une gestion intelligente du traitement des eaux, réduisant les besoins en intervention humaine et optimisant l'efficacité énergétique et opérationnelle du dispositif.

Dans un mode de réalisation, les eaux sales passent par au moins un filtre avant de passer dans la membrane ; ledit filtre est au moins l'un des filtres suivants : un filtre à charbon, un nanofiltre ayant des pores compris entre 0,5 nm et 2 nm, un ultrafiltre ayant des pores compris entre 0,01 microns et 0,1 microns.

Selon un deuxième aspect, la présente invention vise un procédé de filtration pour eaux sales, remarquable en ce qu'il comporte les étapes suivantes :
a) - passage d'une eau sale dans au moins un dispositif de filtration d'eaux sales, ledit dispositif ayant un corps rectangulaire ayant deux faces et une épaisseur, une première entrée/sortie et une deuxième entrée/sortie, une pluralité de chemins positionné sur chaque face ; ladite pluralité de chemins est reliée avec ladite première entrée/sortie et ladite deuxième entrée/sortie ; la première entrée/sortie et la deuxième entrée/sortie étant configurés pour amener un fluide d'eaux sales à traiter passant par la pluralité de chemins ; une membrane en graphène positionnée sur chaque face dudit corps ; ladite membrane comporte un tressage comportant des pores en forme de polygones ;
b) - récupération d'eau filtrée issue de l'étape précédente pour une installation sanitaire.

Les avantages, buts et caractéristiques particulières de ce procédé étant similaires à ceux du dispositif de filtration d'eaux sales objet de la présente invention, ils ne sont pas rappelés ici.

Dans un mode de réalisation, ledit procédé comporte, en outre, une étape préliminaire de passage d'eau sale dans un préfiltre ; le passage de l'eau sale issue du préfiltre se fait en séquentiel.

Dans un mode de réalisation, ledit procédé comporte, en outre, une étape préliminaire de passage d'eau sale dans un préfiltre ; le passage de l'eau sale issue du préfiltre se fait en continu.

Dans un mode de réalisation, ledit procédé comporte une étape de nettoyage comprenant l'injection d'eau, ou de l'eau avec de l'air, à la première entrée/sortie ou la deuxième entrée/sortie.

### Brève description des figures

D'autres avantages, buts et caractéristiques de la présente invention ressortent de la description qui suit, faite dans un but explicatif et nullement limitatif, en regard des dessins annexés, dans lesquels :
La figure 1 représente un schéma d'un dispositif de filtration d'eaux sales ;
La figure 2 représente un autre schéma d'un dispositif de filtration d'eaux sales avec une membrane en vue partielle ;
La figure 3 représente un exemple de rangement d'un dispositif.

### Description des modes de réalisation

La gestion et le traitement des eaux sales, qu'il s'agisse des eaux grises, des eaux noires, ou des eaux usées, nécessite un système efficace d'aspiration, de séparation, et de nettoyage pour garantir un traitement optimal et une réutilisation durable. Voici comment ces différentes phases (aspiration/séparation et nettoyage) s'intègrent dans un système de filtration avancé, y compris l'utilisation de méthodes comme l'afflux de microbulles d'air pour améliorer l'efficacité du traitement.

Une fois les eaux sales aspirées dans le système, elles passent par une phase de séparation, où les différents types d'impuretés sont isolés pour un traitement ultérieur.

La filtration mécanique capture les solides en suspension, tels que les débris organiques, les particules de saleté, et autres matières visibles. Cela est généralement fait à travers des filtres ou des membranes qui retiennent les plus gros contaminants en premier.

Le système comporte deux entrées/sorties (première et deuxième 20a et 20b), ce qui permet une gestion efficace du flux de fluide. Lors de la phase d'aspiration et de séparation, les eaux sales peuvent être dirigées vers l'un ou l'autre des exutoires selon le type d'eau à traiter (grises ou noires), ou selon la charge de travail sur le système. Cette configuration permet une plus grande flexibilité et une efficacité accrue dans la gestion des flux d'eau, permettant ainsi d'adapter le système à différentes conditions ou types de pollution.

Selon une variante non représentée, **il** n'y a que la première entrée /sortie. Cette conception simplifiée permet un fonctionnement en mode continu ou mode cyclique avec des phases alternées d'injection et d'extraction.

Avec l'ajout de la deuxième entrée/sortie, cela permet d'augmenter le traitement des eaux sales.

Selon un autre exemple il y a une troisième entrée/sortie.

Une fois la filtration et la séparation effectuées, la phase de nettoyage de la membrane est essentielle pour maintenir le système en état de fonctionnement optimal, en empêchant l'encrassement ou la détérioration des performances. Cette phase peut inclure plusieurs sous-processus, incluant l'eau, l'air et des intrants chimiques si nécessaire.

Après une période de filtration, la membrane peut être rincée à l'eau pour éliminer les débris accumulés, les particules et les résidus organiques qui se sont déposés sur la surface de la membrane. Ce processus aide à restaurer la perméabilité de la membrane et à prévenir le colmatage.

Dans certains cas, des agents chimiques de nettoyage peuvent être nécessaires pour dissoudre les substances difficiles à éliminer, comme les graisses, les huiles ou les dépôts minéraux qui adhèrent à la membrane. Ces intrants chimiques peuvent être appliqués sous forme de solutions nettoyantes pour désinfecter la membrane et détruire les bactéries ou les agents pathogènes qui pourraient nuire au système.

L'une des méthodes les plus efficaces pour nettoyer la membrane est l'utilisation d'un flux d'air combiné à de l'eau et, dans certains cas, de microbulles pour améliorer le nettoyage.

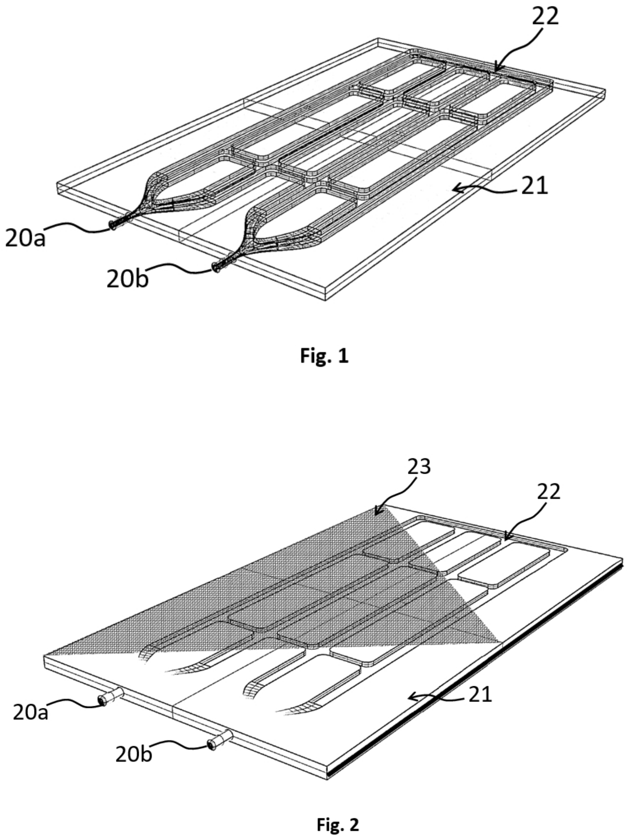

La figure 1 montre un schéma d'un dispositif de filtration d'eaux sales.

La figure représente un dispositif de filtration d'eaux sales, avec un corps rectangulaire 21, caractérisé par deux faces principales et une épaisseur. Ce corps rectangulaire est pourvu de deux ouvertures : une première entrée/sortie 20a et une deuxième entrée/sortie 20b, situées de manière à permettre l'entrée ou la sortie du fluide.

Sur chaque face du corps rectangulaire, une série de chemins est présente. Ces chemins sont conçus pour guider et distribuer le flux d'eaux sales. Ils sont directement connectés aux deux entrées/sorties 20a et 20b, permettant au fluide d'eaux sales de circuler à travers l'ensemble du dispositif. Les chemins jouent un rôle essentiel dans la répartition uniforme du fluide sur toute la surface du filtre.

Les chemins sont comme des chenaux qui ont une profondeur d'au moins 0,2 mm et dont la largeur est d'au moins 0,2 mm. Selon un autre exemple la largeur est de 0,5 mm.

Les deux entrées/sorties, 20a et 20b, sont configurées de manière à permettre un écoulement fluide des eaux sales à travers les multiples chemins. Ainsi, le fluide entre par l'une des ouvertures, traverse les chemins qui couvrent chaque face du dispositif.

La pluralité de chemins 22 présente sur chaque face du corps rectangulaire 21 du dispositif de filtration est agencée de manière symétrique par rapport au plan longitudinal de ce corps. Cette disposition symétrique joue un rôle essentiel dans l'efficacité et la robustesse du processus de filtration, tout en offrant plusieurs avantages techniques.

Le corps rectangulaire du dispositif comporte un plan longitudinal, qui est un plan passant au milieu du dispositif, divisant ainsi le corps en deux parties égales, chacune avec sa propre face. Sur chaque face, la pluralité de chemins est disposée de manière symétrique par rapport à ce plan. Cela signifie que si l'on divise le dispositif en deux par ce plan, la disposition des chemins sur l'une des faces est le reflet exact de celle de l'autre face.

La symétrie des chemins assure une distribution uniforme du fluide d'eaux sales à travers les deux faces du corps. Lorsque l'eau entre dans le dispositif par l'une des entrées, 20a ou 20b, elle se répartit équitablement entre les deux faces. La symétrie garantit que le fluide rencontre des résistances égales des deux côtés, évitant ainsi des déséquilibres dans le flux qui pourraient compromettre la performance du dispositif. Une autre conséquence positive de la symétrie est la réduction des contraintes mécaniques sur le corps du dispositif. Si les chemins étaient disposés de manière asymétrique, cela pourrait entraîner des zones de haute pression ou de tension sur une partie du dispositif, entraînant potentiellement une usure prématurée ou des déformations du matériau.

Grâce à cette disposition symétrique, la conception du dispositif peut être facilement modulaire, ce qui signifie que plusieurs unités de filtration peuvent être connectées ou empilées sans compromettre l'efficacité de la filtration. La symétrie facilite l'intégration avec d'autres composants ou systèmes de traitement d'eau.

Selon un exemple, la longueur du corps de la forme rectangulaire de maximum 1m20 et l'épaisseur total est entre 0,8 et 0,9mm.

Non représenté sur cette figure, le dispositif comporte une première pompe et une deuxième pompe.

La première pompe est configurée pour amener les eaux sales dans le corps par la première entrée/sortie 20a.

La deuxième pompe est configurée pour extraire des eaux traitées hors du corps par la première entrée/sortie 20a.

Selon une variante, la première pompe est configurée pour amener les eaux sales dans le corps par la deuxième entrée/sortie 20b. La première pompe achemine des eaux sales à la fois dans la première entrée/sortie 20a et la deuxième entrée/sortie 20b.

Selon une autre variante, la deuxième pompe est configurée pour amener les eaux sales dans le corps par la deuxième entrée/sortie 20b. La deuxième pompe achemine des eaux sales à la fois dans la première entrée/sortie 20a et la deuxième entrée/sortie 20b.

Le dispositif comporte une vanne positionnée en aval de la première pompe et en aval de la deuxième pompe.

Les vannes permettent de réguler l'écoulement des eaux à l'entrée et/ou à la sortie du corps.

Selon un exemple, les vannes sont utilisées mécaniquement ou électroniquement avec un microcontrôleur.

Ce microcontrôleur comporte une unité de traitement configuré pour contrôler l'ouverture ou la fermeture de la vanne et envoyer des données de la vanne vers un terminal mobile.

Le terminal mobile peut être l'un des éléments suivants : un smartphone, une tablette, un ordinateur, une montre connectée.

Selon un exemple de réalisation, le dispositif est accompagné par au moins un filtre.

Le filtre est installé avant ou après le passage des eaux sales dans la membrane.

Ce filtre est au moins l'un des éléments suivants : filtre à charbon, nanofiltre, ultrafiltre.

Le nanofiltre est configuré pour faire de la nanofiltration avec des pores compris entre 0,5 nm et 2 nm.

L'ultrafiltre est configuré pour faire de l'ultrafiltration avec des pores compris entre 0,01 microns et 0,1 microns.

Chaque filtre comporte une entrée et une sortie.

Selon un exemple de passage des eaux sales, les eaux sales rentrent par l'entrée du filtre à charbon et sort par sa sortie. La sortie du filtre à charbon est connectée à l'entrée du nanofiltre et/ou de l'ultrafiltre. La sortie du nanofiltre et de l'ultrafiltre amènent les eaux sales jusqu'à la membrane.

Selon une variante, le filtre est positionné à l'extérieur et en amont du dispositif.

Selon une autre variante, le filtre est positionné à l'intérieur du dispositif.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La figure 2 montre un autre schéma d'un dispositif de filtration d'eaux sales avec une membrane partielle.

Cette figure montre les aspects décrits ci-avant avec une membrane.

La membrane est positionnée sur chaque face du corps rectangulaire, la membrane en graphène est un élément central du processus de filtration. Cette membrane est faite de graphène, un matériau reconnu pour ses excellentes propriétés filtrantes. La membrane présente un tressage complexe, avec des pores en forme de polygones. Ces pores permettent de filtrer efficacement les particules solides, les contaminants, et autres impuretés contenues dans les eaux sales, tout en laissant passer le fluide purifié.

Les eaux sales amenées via l'une des entrées, 20a ou 20b, circulent à travers la pluralité de chemins 22, et sont filtrées au fur et à mesure qu'elles traversent la membrane en graphène 23.

La disposition des pores dans le tressage de la membrane garantit une filtration optimale, bloquant les impuretés tout en laissant l'eau propre circuler vers la sortie.

Le fluide filtré ressort par l'autre entrée/sortie, 20b ou 20a, selon la direction du flux initial.

La membrane en graphène 23 présente sur chaque face du dispositif de filtration d'eaux sales est équipée d'une pluralité de pores aux dimensions soigneusement contrôlées pour garantir une efficacité maximale dans le processus de filtration. Ces pores jouent un rôle crucial en déterminant la taille des particules qui seront bloquées, tout en laissant passer l'eau purifiée.

Selon un exemple de réalisation, le graphène est réalisé en feuillet ou en impression 3D.

Selon un autre exemple de réalisation, la membrane comporte un support réalisé en plusieurs matériaux complétant le feuillet de graphène.

L'ajout d'un support dans un autre matériau (par exemple polymère + céramique, ou métal + polymère) augmente la rigidité, la résistance à la traction et la stabilité dimensionnelle de la membrane. Le graphène seul est fragile et le support permet d'assurer la manipulation.

Les pores de la membrane ont une longueur comprise entre 1 nm et 500 nm, et de préférence entre 200 nm et 500 nm. Cette gamme de taille des pores est optimisée pour répondre aux exigences de filtration des eaux sales, permettant de traiter une grande variété de contaminants présents dans les liquides à purifier.

Les pores les plus petits, allant de 1 nm à 200 nm, sont capables de filtrer les particules de très petite taille, comme les virus, les nanoparticules, et certains polluants chimiques dissous. Ces pores agissent comme un filtre ultrafin, bloquant les contaminants qui ne sont généralement pas retenus par des systèmes de filtration traditionnels.

Les pores plus larges, compris entre 200 nm et 500 nm, sont plus adaptés pour capturer des impuretés de taille moyenne à grande, telles que les bactéries, les microplastiques, les débris organiques et d'autres matières solides présentes dans les eaux sales. Ces dimensions permettent également une meilleure gestion du débit du fluide, facilitant un flux d'eau plus rapide tout en maintenant une haute capacité de rétention des impuretés.

Selon une variante, la taille des pores est variable. De ce fait, grâce à leur taille variable, les pores de la membrane capturent les débris, la saleté et les micro-organismes indésirables dans les eaux sales. Les pores plus petits retiennent des particules plus fines comme les nanoparticules, tandis que les pores plus grands retiennent les micro-organismes tels que les bactéries.

Une grande partie des polluants dans les eaux sales modernes proviennent des microplastiques, qui ont tendance à mesurer entre 100 nm et 500 nm. La plage de taille des pores (200 nm à 500 nm) est particulièrement efficace pour capturer ces particules, contribuant à une filtration plus poussée.

Dans un système de filtration d'eaux sales, l'utilisation d'une pluralité de dispositifs de filtration agencés en série ou en parallèle offre des avantages significatifs, tant en termes d'efficacité de filtration que d'adaptabilité aux besoins spécifiques de traitement. Ces deux configurations (série et parallèle) ont des impacts différents sur la performance globale du système et sont choisies en fonction des exigences de l'application.

Dans une configuration en série, les dispositifs de filtration sont connectés les uns à la suite des autres, formant une chaîne où l'eau passe par plusieurs étapes de filtration successives. Le fluide entre dans le premier dispositif, est filtré, puis continue vers le dispositif suivant, et ainsi de suite, jusqu'à la fin du processus. L'un des principaux avantages de cette configuration est qu'elle permet une filtration progressive en plusieurs étapes. Chaque dispositif de filtration peut être conçu pour cibler des types spécifiques de contaminants ou des tailles de particules différentes.

Par exemple, le premier filtre pourrait éliminer les plus grosses particules et débris, tandis que les filtres suivants se concentreraient sur des contaminants de plus en plus petits, comme les particules fines, les micro-organismes ou les substances chimiques dissoutes.

Dans une configuration en parallèle, plusieurs dispositifs de filtration fonctionnent simultanément. Le flux d'eau est réparti entre les différents dispositifs, chacun filtrant une partie du fluide en même temps. Tous les dispositifs sont donc indépendants les uns des autres dans leur fonctionnement, bien qu'ils agissent sur le même volume d'eau.

Le principal avantage de cette configuration est l'augmentation du débit global. En divisant le flux d'eau entre plusieurs dispositifs, chaque unité peut traiter une portion du fluide, ce qui permet de filtrer un volume d'eau plus important dans un laps de temps plus court.

Cela est particulièrement utile dans des installations de grande taille, où de grandes quantités d'eaux sales doivent être traitées rapidement, comme dans les industries ou les stations d'épuration.

En divisant le flux d'eau entre plusieurs dispositifs, la pression exercée sur chaque unité est réduite. Cela permet de maintenir une perte de pression minimale, ce qui est essentiel pour conserver une bonne efficacité de filtration tout en réduisant les besoins en énergie pour le pompage de l'eau.

Cette répartition des charges contribue également à prolonger la durée de vie des membranes et des filtres, qui sont moins sollicités que dans une configuration unique à débit élevé.

L'utilisation de membranes fabriquées par impression 3D dans un système de filtration offre des avantages remarquables en termes de flexibilité de conception, de durabilité accrue et de facilité d'entretien, notamment pour le nettoyage. L'impression 3D permet de personnaliser les membranes de filtration pour répondre aux besoins spécifiques de différents types de traitements d'eau, tout en améliorant leur longévité et en facilitant leur maintenance.

Selon un exemple, le corps comporte dans son épaisseur une rainure. La rainure facilite insertion du dispositif. Cette intégration mécanique discrète participe à la compacité du dispositif et à sa modularité.

Selon une forme de réalisation particulièrement avantageuse, la rainure formée dans l'épaisseur du corps est configurée pour recevoir un joint d'étanchéité ou un logement pour capteur ou un passage ou un élément de fixation.

Le joint est positionné de manière à venir s'appuyer contre une surface de contact, telle qu'un élément de logement, un couvercle ou un module adjacent. La rainure sert également de guide de positionnement pour le joint facilitant l'assemblage, le démontage et la maintenance du dispositif.

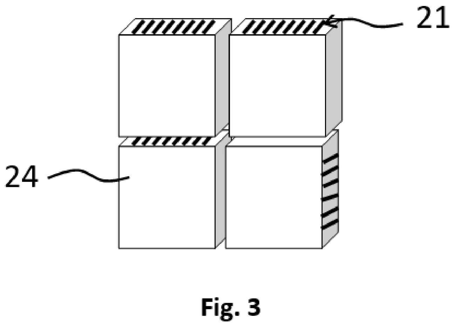

La figure 3 montre un exemple de rangement d'un dispositif.

Cette figure comporte des caractéristiques techniques similaires à celle des figures précédentes.

Le corps 21 comporte dans son épaisseur au moins un rail ou au moins une encoche permettant de ranger le corps 21 dans un casier 24.

Ces exemples d'intégrations mécaniques permettent de montrer que le dispositif comporte un casier 24 de forme d'un parallélépipède.

Le casier 24 comporte une pluralité d'emplacement permettant le rangement d'une pluralité de corps 21.

Selon un exemple de réalisation, il y a une pluralité de casier 24 contenant une pluralité d'emplacement pour ranger le corps rectangulaire de filtration à l'intérieur.

Le rangement de chaque casier 24 est soit en série soit en parallèle, soit empilé. Chaque casier est relié aux autres.

Le casier 24 comporte une largeur et une hauteur.

Chaque hauteur comporte un élément de connexion assurant la fixation du casier 24 avec la rainure ou l'encoche ou le rail du corps 21 du dispositif.

Selon un exemple, le casier 24 est en acier ou en plastique.

Selon un premier exemple, la première pompe et la deuxième pompe est reliée à une des premières entrée/sortie d'un des dispositifs rangés dans un casier 24 ou la première pompe et la deuxième pompe est reliée à l'ensemble des premières entrée/sortie de chaque dispositif dans le casier 24.

Selon un deuxième exemple, la première pompe et la deuxième pompe est reliée à une des deuxièmes entrée/sortie d'un des dispositifs rangés dans un casier 24 ou la première pompe et la deuxième pompe est reliée à l'ensemble des deuxièmes entrée/sortie de chaque dispositif dans le casier.

La distribution des eaux sales passe par un raccord présentant une pluralité d'ouverture. Chaque ouverture comporte une canalisation amenant les eaux sales de la première pompe vers chaque première entrée/sortie ou vers chaque deuxième entrée/sortie.

L'ouverture est positionnée sur le dessus ou sur l'un des côtés du casier 24.

La distribution des eaux traitées passant par la première entrée/sortie ou la deuxième entrée/sortie se faite pas des canalisations. Chaque canalisation amène les eaux traitées dans un raccord relié à la deuxième pompe.

Selon une variante, chaque canalisation ou chaque raccord comporte une vanne.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques ne rendent de telles combinaisons impossibles ou dénuées de sens.

### LISTE DES SIGNES DE RÉFÉRENCE

**[Table 1]**

| Références | Désignations |
|---|---|
| 20a | première entrée/sortie |
| 20b | deuxième entrée/sortie |
| 21 | corps |
| 22 | chemin |
| 23 | membrane |
| 24 | casier |

## Revendications

1. Dispositif de filtration d'eaux sales comportant un corps (21) rectangulaire ayant deux faces et une épaisseur, une première entrée/sortie (20a), **caractérisé en ce que** ledit corps comporte :
- une pluralité de chemins (22) positionnés sur chaque face ; ladite pluralité de chemins est reliée avec ladite première entrée/sortie ; la pluralité de chemins de chaque face est symétrique par rapport au plan longitudinal dudit corps ;
- la première entrée/sortie étant configuré pour amener un fluide d'eaux sales à traiter passant par la pluralité de chemins ;
- une membrane (23) en graphène positionnée sur chaque face dudit corps ; ladite membrane comporte un tressage comportant des pores en forme de polygones ; la pluralité de pores de la membrane ayant une longueur comprise entre 1nm et 500nm, de préférence entre 200nm et 500nm ; lesdits pores étant configurées pour la filtration des eaux sales ;
- le corps comporte dans son épaisseur une rainure.

2. Dispositif selon la revendication 1, dans lequel le corps comporte une deuxième entrée/sortie (20b) reliant à ladite pluralité de chemins.

3. Dispositif selon la revendication 1, dans lequel la pluralité de chemins (22) comporte une largeur comprise entre 0,09 mm et 1 mm, de préférence entre 0,2 mm et 0,5 mm.

4. Dispositif selon la revendication 1, dans lequel le dispositif comporte, en outre, une première pompe configurée pour amener les eaux sales dans le corps par la première entrée/sortie (20a) et une deuxième pompe configurée pour extraire des eaux traitées hors du corps par la première entrée/sortie (20a).

5. Dispositif selon la revendication 4, dans lequel le dispositif comporte une vanne positionnée en aval de la première pompe et en aval de la deuxième pompe.

6. Dispositif selon la revendication 1, dans lequel les eaux sales passent par au moins un filtre avant de passer dans la membrane ; ledit filtre est au moins l'un des filtres suivants : un filtre à charbon, un nanofiltre ayant des pores compris entre 0,5 nm et 2 nm, un ultrafiltre ayant des pores compris entre 0,01 microns et 0,1 microns.

7. Procédé de filtration pour eaux sales, **caractérisé en ce qu'**il comporte les étapes suivantes :
a) - passage d'une eau sale dans au moins un dispositif de filtration d'eaux sales selon l'une quelconque des revendications 1 à 6, ledit dispositif ayant un corps rectangulaire ayant deux faces et une épaisseur, une première entrée/sortie et une deuxième entrée/sortie, une pluralité de chemins positionné sur chaque face ; ladite pluralité de chemins est reliée avec ladite première entrée/sortie et ladite deuxième entrée/sortie ; la première entrée/sortie et la deuxième entrée/sortie étant configurés pour amener un fluide d'eaux sales à traiter passant par la pluralité de chemins ; une membrane en graphène positionnée sur chaque face dudit corps ; ladite membrane comporte un tressage comportant des pores en forme de polygones ;
b) - récupération d'eau filtrée issue de l'étape précédente pour une installation sanitaire.

8. Procédé selon la revendication 7, dans lequel ledit procédé comporte, en outre, une étape préliminaire de passage d'eau sale dans un préfiltre ; le passage de l'eau sale issue du préfiltre se fait en séquentiel.

9. Procédé selon la revendication 7, dans lequel ledit procédé comporte, en outre, une étape préliminaire de passage d'eau sale dans un préfiltre ; le passage de l'eau sale issue du préfiltre se fait en continu.

10. Procédé selon la revendication 7, dans lequel ledit procédé comporte une étape de nettoyage comprenant l'injection d'eau, ou de l'eau avec de l'air, à la première entrée/sortie ou la deuxième entrée/sortie.
